# EUROPEAN PATENT APPLICATION

(11) **EP 3 683 711 A1**
(43) Date of publication of application: **22.07.2020**
(21) Application number: 18856623.6
(22) Date of filing: 18.07.2018
(51) Int. Cl.: G06F 21/64, G06F 12/00, G09C 1/00, H04L 9/32

(54) **INFORMATION PROCESSING DEVICE, INFORMATION PROCESSING METHOD, AND PROGRAM**

(30) Priority: 14.09.2017 JP 2017176730
(71) Applicant: Sony Corporation, Tokyo 108-0075 (JP)
(72) Inventor: TAKAHASHI, Koki, Tokyo 141-0031 (JP); WATANABE, Kazuhiro, Tokyo 141-0031 (JP); ISOZU, Masaaki, Tokyo 141-0031 (JP)
(74) Representative: MFG Patentanwälte Meyer-Wildhagen Meggle-Freund Gerhard PartG mbB
(86) International application number: PCT/JP2018/026801
(87) International publication number: WO 2019/054038

(57) **Abstract**

To enable a device not including a P2P database to confirm authenticity of arbitrary data on the basis of management data of the P2P database.

Provided is an information processing device including an acquisition unit configured to acquire information regarding authenticity of arbitrary data, the information being generated on the basis of management data of a P2P database, and a provision unit configured to provide the information regarding authenticity of arbitrary data to a device not including the P2P database.

## Description

### TECHNICAL FIELD

The present disclosure relates to an information processing device, an information processing method, and a program.

### BACKGROUND ART

In recent years, services using a peer-to-peer database for blockchain data or the like disclosed in Non-Patent Document 1 below have been actively developed. Examples of the services include Bitcoin in Non-Patent Document 2 below and the like, which uses blockchain data for exchanging virtual currency.

A service using a peer-to-peer database for blockchain data or the like can prevent falsification and the like of data managed in the peer-to-peer database and ensure authenticity of the data. Then, a device including a peer-to-peer database can confirm the authenticity of the data on the basis of whether or not arbitrary data (or data uniquely identifying the data) is registered in the peer-to-peer database.

### CITATION LIST

### NON-PATENT DOCUMENT

Non-Patent Document 1: Melanie Swan, "Blockchain", (US), O'Reilly Media, 2015-01-22
Non-Patent Document 2: Andreas M. Antonopoulos, "Mastering Bitcoin", (US), O'Reilly Media, 2014-12-01

### SUMMARY OF THE INVENTION

### PROBLEMS TO BE SOLVED BY THE INVENTION

However, a device not including a peer-to-peer database cannot confirm the authenticity of arbitrary data. Therefore, the present disclosure has been made in view of the above problem, and an object of the present disclosure is to provide new and improved information processing device, information processing method, and program for enabling a device not including a peer-to-peer database to confirm authenticity of arbitrary data on the basis of management data of the peer-to-peer database.

### SOLUTIONS TO PROBLEMS

According to the present disclosure, an information processing device including an acquisition unit configured to acquire information regarding authenticity of arbitrary data, the information being generated on the basis of management data of a P2P database, and a provision unit configured to provide the information regarding authenticity of arbitrary data to a device not including the P2P database is provided.

Furthermore, according to the present disclosure, an information processing method executed by a computer, the method including acquiring information regarding authenticity of arbitrary data, the information being generated on the basis of management data of a P2P database, and providing the information regarding authenticity of arbitrary data to a device not including the P2P database is provided.

Furthermore, according to the present disclosure, a program for causing a computer to execute acquiring information regarding authenticity of arbitrary data, the information being generated on the basis of management data of a P2P database, and providing the information regarding authenticity of arbitrary data to a device not including the P2P database.

### EFFECTS OF THE INVENTION

As described above, according to the present disclosure, a device not including a peer-to-peer database becomes able to confirm authenticity of arbitrary data on the basis of management data of the peer-to-peer database.

Note that the above-described effect is not necessarily limited, and any of effects described in the present specification or another effect that can be grasped from the present specification may be exerted in addition to or in place of the above-described effect.

### BRIEF DESCRIPTION OF THE DRAWINGS

Fig. 1 is a diagram for describing an overview of blockchain data that is a kind of peer-to-peer database.
Fig. 2 is a diagram for describing an overview of blockchain data that is a kind of peer-to-peer database.
Fig. 3 is a diagram for describing an overview of blockchain data that is a kind of peer-to-peer database.
Fig. 4 is a diagram for describing a configuration example of an information processing system according to the present embodiment.
Fig. 5 is a block diagram illustrating a functional configuration example of a data confirmation device 100 according to the present embodiment.
Fig. 6 is a block diagram illustrating a functional configuration example of a node device 200 according to the present embodiment.
Fig. 7 is a block diagram illustrating a functional configuration example of a user device 300 according to the present embodiment.
Fig. 8 is a flowchart illustrating an example of a flow of data authenticity confirmation processing.
Fig. 9 is a flowchart illustrating an example of a flow of data authenticity confirmation processing.
Fig. 10 is a diagram illustrating an example of an input screen of data to be confirmed for authenticity.
Fig. 11 is a diagram illustrating an example of a screen for requesting necessity of confirmation of authenticity of data.
Fig. 12 is a diagram illustrating an example of a screen for requesting necessity of confirmation of authenticity of data.
Fig. 13 is a diagram illustrating an example of a screen for requesting necessity of confirmation of authenticity of data.
Fig. 14 is a diagram illustrating an example of a screen for requesting necessity of confirmation of authenticity of data.
Fig. 15 is a diagram illustrating an example of a screen for requesting necessity of confirmation of authenticity of data.
Fig. 16 is a diagram illustrating an example of a screen for requesting necessity of confirmation of authenticity of data.
Fig. 17 is a diagram illustrating an example of a screen for requesting necessity of confirmation of authenticity of data.
Fig. 18 is a diagram illustrating an example of a screen for requesting necessity of confirmation of authenticity of data.
Fig. 19 is a diagram illustrating an example of a screen for requesting necessity of confirmation of authenticity of data.
Fig. 20 is a diagram illustrating an example of a screen for forcing confirmation of authenticity of data.
Fig. 21 is a diagram illustrating an example of a screen displaying that data cannot be displayed unless authenticity is confirmed.
Fig. 22 is a diagram illustrating an example of a screen displaying that there is a possibility that data is not authentic because authenticity is not confirmed.
Fig. 23 is a diagram illustrating an example of a screen displaying a confirmation result of authenticity of data by a plurality of node devices 200.
Fig. 24 is a diagram illustrating an example of a screen displaying a confirmation result of authenticity of data by a plurality of node devices 200.
Fig. 25 is a diagram illustrating an example of a screen displaying a confirmation result of authenticity of data by a plurality of node devices 200.
Fig. 26 is a diagram illustrating an example of a screen displaying a confirmation result of authenticity of data by a plurality of node devices 200.
Fig. 27 is a diagram illustrating an example of a screen displaying a confirmation result of authenticity of data by a plurality of node devices 200.
Fig. 28 is a diagram illustrating an example of a screen displaying that authenticity of data has not been confirmed.
Fig. 29 is a block diagram illustrating a hardware configuration example of an information processing device 900 that implements a data confirmation device 100, a node device 200, or a user device 300 according to the present embodiment.

### MODE FOR CARRYING OUT THE INVENTION

Favorable embodiments of the present disclosure will be described in detail below with reference to the accompanying drawings. Note that, in the present specification and the drawings, redundant description of constituent elements having substantially the same functional configurations is omitted by giving the same reference numerals.

Note that the description will be given in the following order.
1. Overview of peer-to-peer database
2. Embodiments
   2.1. Overview
   2.2. System configuration example
   2.3. Functional configuration example of data confirmation device 100
   2.4. Functional configuration example of node device 200
   2.5. Functional configuration example of user device 300
   2.6. Flow of processing
   2.7. User interface example
3. Hardware configuration example
4. Conclusion

### <1. Overview of peer-to-peer database>

First, an overview of a peer-to-peer database will be described before describing embodiments of the present disclosure.

In an information processing system according to the present embodiment, a distributed peer-to-peer database distributed in a peer-to-peer network is used. Note that the peer-to-peer network may also be called a peer-to-peer distributed file system. Hereinafter, the peer-to-peer network may be referred to as a "P2P network" and the peer-to-peer database may be referred to as a "P2P database". As an example of the P2P database, blockchain data distributed in the P2P network may be used. Therefore, first, an overview of a blockchain system will be described as an example.

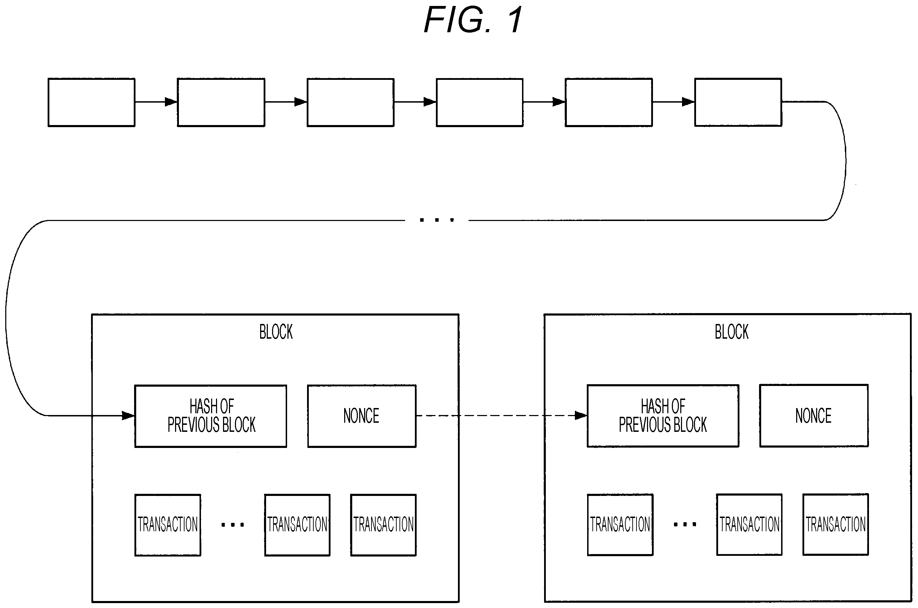

As illustrated in Fig. 1, the blockchain data is data including a plurality of blocks connected as if the blocks formed a chain. In each block, one or two or more target data can be stored as a transaction.

An example of the blockchain data includes blockchain data used for exchanging virtual currency data such as Bitcoin. The blockchain data used for exchanging virtual currency data includes, for example, values called hash of a previous block and nonce. The hash of the previous block is information used to determine whether or not a block is a "correct block" that is correctly connected from the previous block. The nonce is information used to prevent spoofing in authentication using a hash, and falsification is prevented using the nonce. An example of the nonce includes a character string, a numeric string, or data indicating a combination thereof, for example.

Furthermore, in the blockchain data, data of each transaction is given an electronic signature using an encryption key or encrypted using an encryption key. Furthermore, the data of each transaction is made public and shared throughout the P2P network.

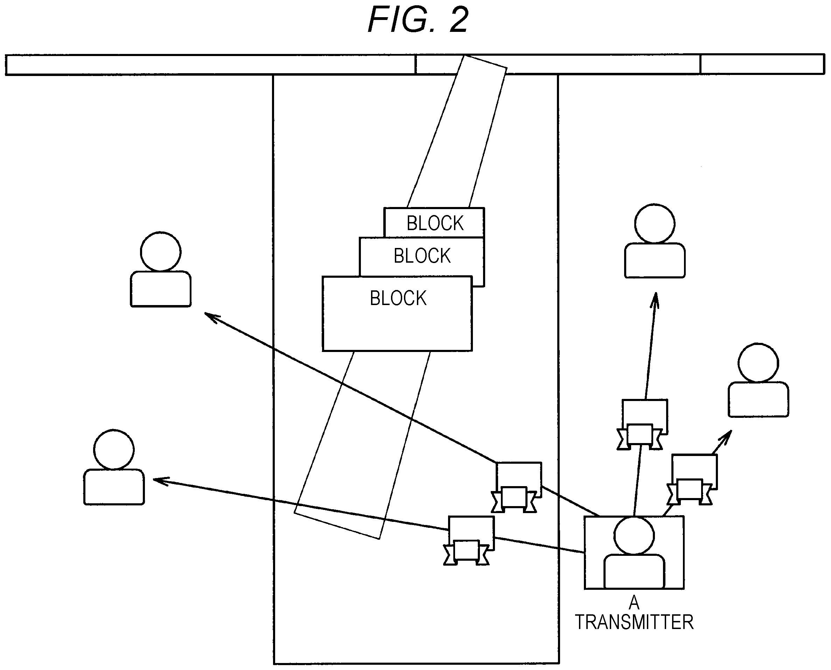

Fig. 2 is a diagram illustrating a state in which target data is registered by a user A in the blockchain system. The user A digitally signs the target data to be registered in the blockchain data using a private key of the user A. Then, the user A broadcasts the transaction including the digitally signed target data on the P2P network. This ensures that the holder of the target data is the user A.

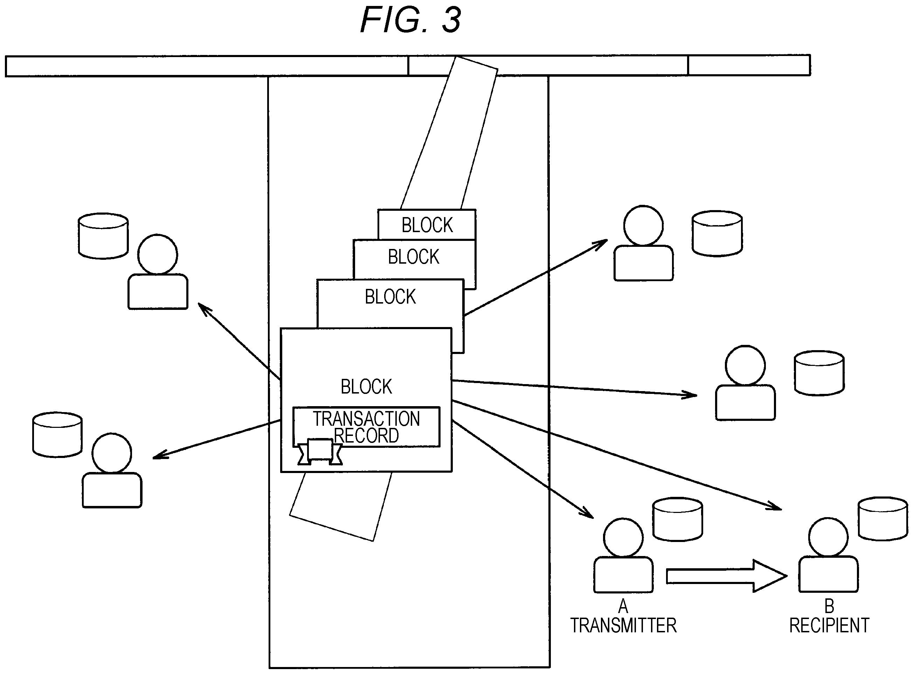

Fig. 3 is a diagram illustrating a state in which target data is transferred from the user A to a user B in the blockchain system. The user A digitally signs the transaction using the private key of the user A and further includes a public key of the user B to the transaction. This indicates that the target data has been transferred from the user A to the user B. Furthermore, the user B may acquire a public key of the user A from the user A when transacting the target data and acquire the digitally signed or encrypted target data.

Furthermore, in the blockchain system, another target data different from existing virtual currency can be included to a blockchain data used for exchanging the virtual currency such as Bitcoin blockchain data, using a sidechain technology, for example.

### <2. Embodiments>

The overview of the peer-to-peer database has been described above. Next, embodiments according to the present disclosure will be described.

### (2.1. Overview)

First, an overview of the present disclosure will be described.

As described above, an information processing system that manages data using a P2P database such as blockchain data can prevent falsification or the like of data and ensure the authenticity of the data. Then, an information processing device participating in the P2P network and including a P2P database can confirm the authenticity of arbitrary data on the basis of the management data of the P2P database.

However, an information processing device not participating in the P2P network or an information processing device that cannot participate in the P2P network cannot confirm the authenticity of data because of not including a P2P database. Furthermore, it may not be easy to newly participate in the P2P network because participants may be limited depending on the type of the P2P network.

In view of the above circumstances, the person of the present disclosure has reached creation of the present disclosure. The information processing system according to the present disclosure can provide information regarding authenticity of arbitrary data generated on the basis of management data of a P2P database to an information processing device not including a P2P database. In other words, the information processing system according to the present disclosure can provide a function to confirm authenticity of arbitrary data on the basis of management data of a P2P database to an information processing device not including a P2P database. As a result, the information processing device not including a P2P database can confirm the authenticity of arbitrary data on the basis of the management data of the P2P database.

At that time, the information processing system according to the present disclosure can improve usability by outputting information regarding data authenticity confirmation processing using various user interfaces.

Furthermore, the information processing system according to the present disclosure can use a data confirmation history as various index values by registering the data confirmation history to the P2P database. For example, the information processing system according to the present disclosure can use the data confirmation history as an index value of importance, attention degree, suspicion of authenticity, or the like of the data.

Furthermore, in a case of confirming that the target data is not authentic, the information processing system according to the present disclosure can acquire authentic data from the P2P database and provide the authentic data to the user. As a result, the information processing system according to the present disclosure can reduce the labor of the user himself/herself obtaining authentic data again, and can improve the convenience for the user.

Note that the present disclosure may be applied to any system, apparatus, service, or the like as long as the system, apparatus, or service uses a P2P database. Hereinafter, a case where the present disclosure is applied to an information processing system that provides a learning achievement/activity recording service will be described. Here, the learning achievement/activity recording service is a service in which each educational institution (e.g., nursery school, kindergarten, elementary school, junior high school, high school, university, graduate school, tutoring school, prep school, qualified school, or the like) registers and manages students' learning achievement records (e.g., records related to exam results, credits, or qualifications) and student activity records (e.g., records related to club activities, student council activities, attendance, or the like) in the P2P database, for example. This ensures the authenticity of the students' learning achievement records and activity records. The service can be used, for example, in a case where a user submits information regarding test results, acquisition units, and the like to a school to sit for an entrance exam, a company scheduled to work for, or the like. Note that the content of the learning achievement/activity recording service is not limited to the above case. For example, the learning achievement/activity recording service may be used by an institution other than an educational institution, and records relating to social experiences, work history, or the like of a target person may be registered and managed in the P2P database.

### (2.2. System configuration example)

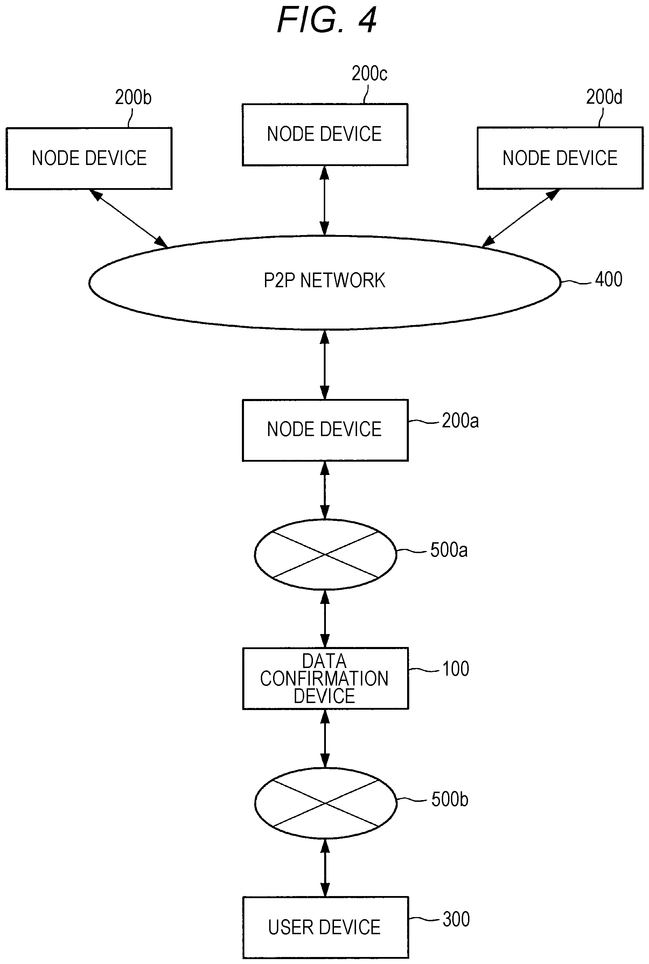

The overview of the present disclosure has been described above. Next, a configuration example of the information processing system according to the present embodiment will be described with reference to Fig. 4.

As illustrated in Fig. 4, the information processing system according to the present embodiment includes a data confirmation device 100, a plurality of node devices 200 (node devices 200a to 200d in Fig. 4), and a user device 300. Furthermore, each of the plurality of node devices 200 is connected to a P2P network 400. Moreover, the data confirmation device 100 and the node device 200a are connected via a network 500a, and the data confirmation device 100 and the user device 300 are connected via a network 500b. Note that the configuration of the information processing system according to the present embodiment is not limited to the configuration in Fig. 4. For example, the number of devices constituting the information processing system may be changed as appropriate. Furthermore, the data confirmation device 100 may be connected to a node device 200 other than the node device 200a via the network 500a.

### (Data confirmation device 100)

The data confirmation device 100 is an information processing device that provides a function to confirm authenticity of arbitrary data to an information processing device not including a P2P database on the basis of management data of P2P database. More specifically, various data and data uniquely specifying the various data (for example, hash values of various data or the like) are registered in the P2P database. Then, the data confirmation device 100 provides the node device 200 with request information requesting arbitrary data authenticity confirmation processing, thereby causing the node device 200 to confirm whether or not same data as the data or the data uniquely specifying the data is registered in the P2P database. Then, the data confirmation device 100 provides the user device 300 with a result of the confirmation processing by the node device 200. As a result, the user device 300 not including the P2P database can confirm the authenticity of arbitrary data on the basis of the management data of the P2P database.

Furthermore, the data confirmation device 100 may cause a plurality of node devices 200 to confirm the authenticity of data. The authenticity of data is more reliably ensured as the number of node devices 200 that performs confirmation is larger, and furthermore, when the node devices 200 with higher reliability perform the confirmation. At this time, the node device 200 that performs the confirmation processing may be determined in advance or may be selected by the user.

Furthermore, the data confirmation device 100 may control the data authenticity confirmation processing as described above on the basis of the selection by the user. For example, in a case where arbitrary data is input by the user, in a case where arbitrary data is output by a predetermined application being activated, or the like, the data confirmation device 100 inquires of the user whether or not to perform the data authenticity confirmation processing. Then, in a case where the user has selected to perform the data authenticity confirmation processing, the data confirmation device 100 may perform the confirmation processing and provide a confirmation result to the user.

Furthermore, the data confirmation device 100 may recommend data authenticity confirmation on the basis of a predetermined rule (or the data confirmation device 100 may simply provide information to be used for judgment for necessity of the confirmation processing on the basis of the predetermined rule). Here, the predetermined rule is set according to, for example, a data type (including data format), a data confirmation history, metadata about data, the number of data (or data amount), the presence or absence of an abnormal value in data, or the presence or absence of a predetermined keyword in data.

For example, in a case where importance, suspicion of the authenticity, or the like of data is different depending on whether the data type (including the data format) is a text format, binary format, still image file, moving image file, sound file, predetermined application file, or the like, the data confirmation device 100 may recommend the data authenticity confirmation on the basis of the data type. Furthermore, the data confirmation device 100 may determine the importance or suspicion of the authenticity of the data on the basis of the presence or absence of confirmation by another user in the past, the number of users who has confirmed the data, the ratio of the users who have confirmed the data, an identification result of the users who have confirmed the data, or the like, and recommend the data authenticity confirmation as appropriate.

Furthermore, in a case where a creator, an editor, or the like of the data has added, to the data, metadata recommending the authenticity confirmation on the basis of the importance, the suspicion of the authenticity, or the like of the data, the data confirmation device 100 may recommend the data authenticity confirmation on the basis of the metadata. Furthermore, in a case where the number of data (or data amount) browsed by the user is a predetermined value or more (for example, in a case where the number of browsed files is two or more, in a case where the data has ten rows or more, in a case where there are one-hundred or more comma-separated data, or the like), the data confirmation device 100 may recommend the data authenticity confirmation, for example, for the purpose of encouraging more careful processing.

Furthermore, for example, in a case where a value abnormally larger than other data (for example, a value larger than an average value of other data by a predetermined value or more), a value abnormally smaller than other data (for example, a value smaller than an average value of other data by a predetermined value or more), or a value of a different type from other data (for example, a case of target data including information other than test scores whereas other data are test scores, or the like) is included in the target data, the authenticity of the data is suspicious. Therefore, the data confirmation device 100 may recommend the data authenticity confirmation. Furthermore, in a case where a predetermined keyword (for example, an important keyword or the like) is included in the target data, the data confirmation device 100 may determine that the importance of the data is high and recommend the data authenticity confirmation.

Furthermore, the data confirmation device 100 may force the data authenticity confirmation on the basis of a rule as described above. In other words, when the data confirmation device 100 determines that the data authenticity confirmation is necessary on the basis of a rule as described above, the data confirmation device 100 may set the data to be unbrowsable until the data authenticity is confirmed or may autonomously (in other words, without selection by the user) perform the data authenticity confirmation processing. Furthermore, the data confirmation device 100 may implement, for example, the processing of providing the information to be used for judgment for necessity of the confirmation processing, recommendation of the confirmation processing, or forcing the confirmation processing by machine learning. More specifically, the data confirmation device 100 may improve the above rule as needed by learning a tendency of the case where the confirmation processing is required (for example, a characteristic of data that requires the confirmation processing, a characteristic of a user who requests the confirmation processing, or the like) or a tendency of the case where the confirmation processing is recommended (for example, a characteristic of data confirmed not to be authentic, or the like) on the basis of the confirmation history or the like.

Furthermore, the data confirmation device 100 may provide the user with not only the confirmation result of the authenticity of the data but also information regarding a possibility of the confirmation processing. Furthermore, the data confirmation device 100 may provide the user with various types of information regarding the confirmation processing (for example, identification information of a user who has requested the confirmation processing, confirmation date and time, identification information of the node device 200 that has performed confirmation, or the like).

Furthermore, the data confirmation device 100 can improve the usability by providing various user interfaces. More specifically, the data confirmation device 100 can improve the usability by providing the user device 300 with a confirmation processing target data input screen, a confirmation processing necessity selection screen, a confirmation processing recommendation/forcing display screen, a confirmation processing possibility display screen, a confirmation result information display screen, or the like. Note that the content of the screen provided by the data confirmation device 100 is not limited to the above example. Furthermore, a user interface other than various screens (for example, a sound user interface or the like) may be provided. Specific examples of the user interface will be described below.

Furthermore, in the case of confirming that the data is not authentic by the data authenticity confirmation processing, the data confirmation device 100 can control acquisition processing for authentic data from the P2P database and can provide the user with the authentic data. More specifically, in the case of confirming that the data is not authentic, the data confirmation device 100 provides the node device 200 with request information (for example, a query or the like) to cause the node device 200 to acquire authentic data from the P2P database, and can provide the user device 300 with the data. As a result, the data confirmation device 100 can reduce the labor of the user himself/herself obtaining authentic data again, and can improve the convenience for the user.

Note that, at that time, the data confirmation device 100 may provide the user device 300 with difference information between the data confirmed not to be authentic and the authentic data newly acquired from the P2P database after the confirmation.

Furthermore, the type of the data confirmation device 100 is not particularly limited. For example, the data confirmation device 100 may be any device including a general-purpose computer, a personal computer (PC), a tablet PC, or the like.

### (Node device 200)

The node device 200 is a device connected to the P2P network 400 and including the P2P database. Then, the node device 200 can perform the data authenticity confirmation processing, acquisition processing for data from the P2P database, and registration processing for data to the P2P database.

More specifically describing the data authenticity confirmation processing, the node device 200 acquires the request information requesting the confirmation processing for arbitrary data from the data confirmation device 100. The request information includes the target data itself for the confirmation processing, or data uniquely specifying the target data or the like (for example, a hash value of the target data, or the like). Then, the node device 200 confirms whether or not the same data as the target data itself or the data uniquely specifying the target data is registered in the P2P database, using the request information, and provides the data confirmation device 100 with a confirmation result.

Furthermore, more specifically describing the acquisition processing for data from the P2P database, in the case of confirming that the target data is not authentic by the above-described confirmation processing, the node device 200 acquires authentic data from the P2P database on the basis of the request information (for example, a query or the like) provided by the data confirmation device 100 and provides the data confirmation device 100 with the data. Note that the case in which the node device 200 acquires data from a P2P database is not limited thereto.

Furthermore, more specifically describing the registration processing for data to the P2P database, in the case where the authenticity confirmation processing has been performed, for example, the node device 200 registers an authenticity confirmation history to the P2P database. More specifically, the node device 200 registers, as data confirmation histories, the confirmation processing target data, a confirmation result, confirmation date and time, and attribute information or the like (for example, identification information, IP address information, or the like) of a user who has requested the confirmation processing (or the user device 300) to the P2P database. As described above, the confirmation histories can be used as various index values (for example, index values of importance, attention degree, suspicion of the authenticity, and the like of data). Note that a case in which the node device 200 registers data to a P2P database is not limited thereto.

Note that the node device 200 is basically provided in the P2P database and uses a predetermined program (for example, a chain code or the like) executed on the P2P database, in the case of confirming the authenticity of data, in the case of acquiring data from the P2P database, and in the case of registering data to the P2P database. By using the program, various types of processing other than transactions of the virtual currency such as Bitcoin or the like are implemented according to a predetermined rule, for example. Hereinafter, the predetermined program provided in the P2P database and executed on the P2P database is referred to as a "P2P database program". Note that the node device 200 may implement these types of processing using a program other than the P2P database program as appropriate.

Furthermore, in the present embodiment, an example in which the plurality of node devices 200 has the same function will be described. However, the node devices 200 may have different functions from one another. For example, a node device 200 that approves registration of data (transaction) to the P2P database (for example, endorsing peer or the like), a node device 200 that instructs each node device 200 on registration after approval (for example, ordering peer or the like), and a node device 200 that registers data to the P2P database (for example, committing peer or the like) may be provided. Note that the type of the node device 200 is not particularly limited similarly to the data confirmation device 100.

### (P2P network 400)

The P2P network 400 is a network in which a P2P database is distributed. As described above, each node device 200 can update the P2P database while maintaining consistency with the P2P database held by another node device 200 by being connected to the P2P network 400.

Note that the type of the P2P network 400 is not particularly limited. For example, the P2P network 400 may be any of a consortium type operated by a plurality of organizations, a private type operated by a single organization, or a public type that does not specifically limit participants.

Note that the communication method, the line type, and the like used for the P2P network 400 are not particularly limited. For example, the P2P network 400 may be implemented as a leased line network such as an internet protocol-virtual private network (IP-VPN). Furthermore, the P2P network 400 may be implemented as a public network such as the Internet, a telephone network, or a satellite network, various local area networks (LANs) including Ethernet (registered trademark), a wide area network (WAN), or the like. Moreover, the P2P network 400 may be implemented as a wireless communication network such as Wi-Fi (registered trademark) or Bluetooth (registered trademark).

### (User device 300)

The user device 300 is a device not including a P2P database and is a device of a user who uses the learning achievement/activity recording service. For example, the user device 300 may be a device of a student or the like who uses the learning achievement/activity recording service. The user can generate the request information requesting the authenticity confirmation processing for arbitrary data by operating the user device 300, and can confirm the authenticity of the data by providing the data confirmation device 100 with the request information.

Note that the arbitrary data requested to undergo the confirmation processing by the user is data acquired from the P2P database in the past, for example. For example, in a case where a student (a user) obtains grade data from the P2P database and submits the grade data to a school to sit for an entrance exam, a case is assumed in which a person in charge of the school (another user) requests the authenticity confirmation processing for the grade data. Furthermore, in a case where a device that caches data acquired from the P2P database (a device provided with a cache storage unit) is present, the arbitrary data for which the confirmation processing is requested by the user may be data acquired from the device. Note that the type of the user device 300 is not particularly limited similarly to the data confirmation device 100.

### (Network 500)

The network 500 is a network that connects the node device 200 and the data confirmation device 100, and the data confirmation device 100 and the user device 300. Note that the communication method, the line type, and the like used for the network 500 are not particularly limited, similarly to the P2P network 400.

The configuration example of the information processing system according to the present embodiment has been described. Note that the configuration described above with reference to Fig. 4 is merely an example, and the configuration of the information processing system according to the present embodiment is not limited to the example. For example, the function of the data confirmation device 100 may be provided in the node device 200 or the user device 300. For example, software that provides the function of the data confirmation device 100 may be executed on the node device 200 or the user device 300. Furthermore, the function of the node device 200 may be provided in the data confirmation device 100 or the user device 300. In other words, the data confirmation device 100 or the user device 300 may participate in the P2P network 400. The configuration of the information processing system according to the present embodiment can be flexibly modified according to specifications and operations.

### (2.3. Functional configuration example of data confirmation device 100)

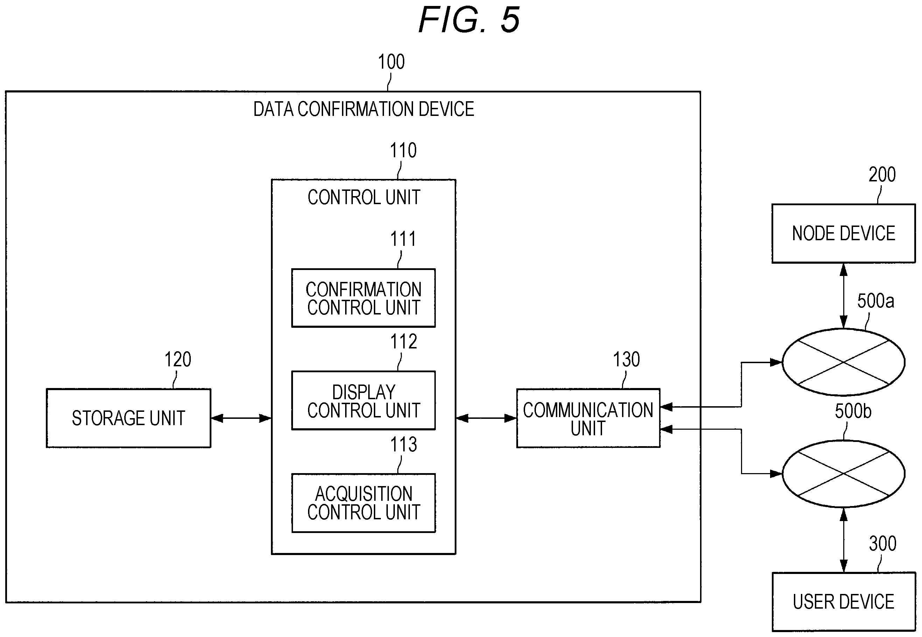

The configuration example of the information processing system according to the present embodiment has been described above. Next, a functional configuration example of the data confirmation device 100 will be described with reference to Fig. 5.

As illustrated in Fig. 5, the data confirmation device 100 includes a control unit 110, a storage unit 120, and a communication unit 130. Furthermore, the control unit 110 includes a confirmation control unit 111, a display control unit 112, and an acquisition control unit 113.

### (Control unit 110)

The control unit 110 has a functional configuration that comprehensively controls overall processing performed by the data confirmation device 100. For example, the control unit 110 can control an output unit (not illustrated) such as a display, a speaker, or the like by controlling the start and stop of the configurations and generating a control signal. Note that the control content of the control unit 110 is not limited thereto. For example, the control unit 110 may control processing generally performed in a general-purpose computer, a PC, a tablet PC, or the like.

### (Confirmation control unit 111)

The confirmation control unit 111 has a functional configuration that controls the data authenticity confirmation processing. More specifically, in a case where the request information requesting the confirmation processing has been provided from the user device 300, the confirmation control unit 111 provides the node device 200 with the request information to cause the node device 200 to execute the confirmation processing. Then, the confirmation control unit 111 acquires the confirmation result from the node device 200 after the confirmation processing has been performed.

### (Display control unit 112)

The display control unit 112 has a functional configuration that controls processing of providing the user device 300 with various user interfaces (in other words, the display control unit 112 functions as a provision unit). More specifically, the display control unit 112 provides the user device 300 with a confirmation processing target data input screen, a confirmation processing necessity selection screen, a confirmation processing recommendation/forcing display screen, a confirmation processing possibility display screen, a confirmation result information display screen, or the like. For example, the display control unit 112 provides the user device 300 with the confirmation result information display screen using the confirmation result after the confirmation processing by the confirmation control unit 111 is terminated. The user device 300 can acquire various screen data and display the various screens by accessing the data confirmation device 100 via the network 500b. Note that, as described above, the content of the screens provided by the display control unit 112 is not limited to the above examples. Furthermore, a user interface other than various screens (for example, a sound user interface or the like) may be provided. For example, in a case where the sound user interface is provided, a sound control unit (not illustrated) provides the user device 300 with sound data.

### (Acquisition control unit 113)

The acquisition control unit 113 has a functional configuration that controls the acquisition processing for data managed in the P2P database. More specifically, in the case of confirming that the data is not authentic by the data authenticity confirmation processing, the acquisition control unit 113 provides the node device 200 with the request information (for example, a query or the like) to cause the node device 200 to acquire authentic data from the P2P database. Thereafter, the acquisition control unit 113 acquires the data from the node device 200 and provides the user device 300 with the data. As a result, the acquisition control unit 113 can reduce the labor of the user himself/herself obtaining authentic data again, and can improve the convenience for the user. Note that the case where the acquisition control unit 113 controls the acquisition processing for the data managed in the P2P database is not limited to the above example.

Furthermore, as described above, the acquisition control unit 113 may provide the user device 300 with difference information between the data confirmed not to be authentic and the authentic data newly acquired from the P2P database. For example, the acquisition control unit 113 may underline, add a predetermined mark to, or highlight the difference portion between the two data.

### (Storage unit 120)

The storage unit 120 has a functional configuration that stores various types of information. For example, the storage unit 120 stores the target data for the confirmation processing, the confirmation result, the request information (for example, a query or the like), and the like. Furthermore, the storage unit 120 stores a program, a parameter, or the like used by each functional configuration of the data confirmation device 100. Note that information stored in the storage unit 120 is not limited thereto.

### (Communication unit 130)

The communication unit 130 controls various communications with the node device 200 and the user device 300. For example, the communication unit 130 transmits the request information requesting the confirmation processing or the request information or the like (for example, a query or the like) used to acquire data from the P2P database in the communication with the node device 200, and receives the authenticity confirmation result, the data acquired from the P2P database, or the like (in other words, the communication unit 130 also functions as an acquisition unit). Furthermore, the communication unit 130 receives the request information requesting the confirmation processing, or the like and transmits the data acquired from the P2P database, the various screen data, or the like in the communication with the user device 300. Note that the communication content of the communication unit 130 is not limited to the above example.

The functional configuration example of the data confirmation device 100 has been described above. Note that the functional configuration described above with reference to Fig. 5 is merely an example, and the functional configuration of the data confirmation device 100 is not limited to such an example. For example, the data confirmation device 100 does not necessarily have all of the configurations illustrated in Fig. 5. Furthermore, the functional configuration of the data confirmation device 100 can be flexibly modified according to specifications and operations.

### (2.4. Functional configuration example of node device 200)

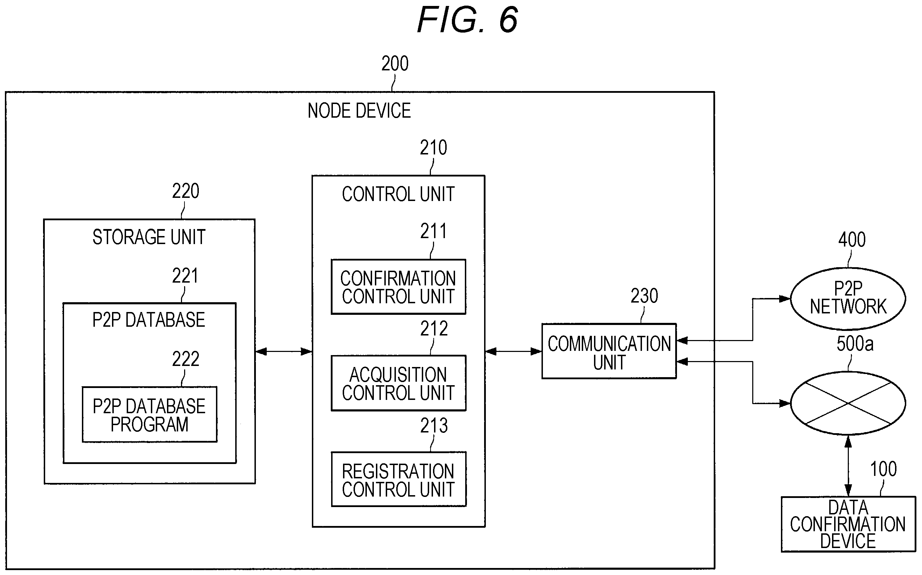

The functional configuration example of the data confirmation device 100 has been described above. Next, a functional configuration example of the node device 200 will be described with reference to Fig. 6.

As illustrated in Fig. 6, the node device 200 includes a control unit 210, a storage unit 220, and a communication unit 230. Furthermore, the control unit 210 includes a confirmation control unit 211, an acquisition control unit 212, and a registration control unit 213. Furthermore, the storage unit 220 includes a P2P database 221, and a P2P database program 222 is provided in the P2P database 221.

### (Control unit 210)

The control unit 210 has a functional configuration that comprehensively controls overall processing performed by the node device 200. For example, the control unit 210 can control an output unit (not illustrated) such as a display or a speaker, or the like by controlling the start and stop of the configurations and generating a control signal. Note that the control content of the control unit 210 is not limited thereto. For example, the control unit 210 may control processing generally performed in a general-purpose computer, a PC, a tablet PC, or the like.

### (Confirmation control unit 211)

The confirmation control unit 211 has a functional configuration that controls the data authenticity confirmation processing. More specifically, in the case where the request information requesting the confirmation processing has been provided from the data confirmation device 100, the confirmation control unit 211 confirms whether or not the same data as the target data for the confirmation processing itself or data uniquely specifying the target data is registered in the P2P database 221, using the request information, and provides the data confirmation device 100 with a confirmation result.

### (Acquisition control unit 212)

The acquisition control unit 212 has a functional configuration that controls acquisition processing of data from the P2P database 221. More specifically, in the case of confirming that the target data is not authentic, the acquisition control unit 212 acquires authentic data from the P2P database 221 on the basis of the request information (for example, a query or the like) provided by the data confirmation device 100, and provides the data confirmation device 100 with the data. Note that a case in which the acquisition control unit 212 acquires data from the P2P database 221 is not limited thereto.

### (Registration control unit 213)

The registration control unit 213 has a functional configuration that controls the registration processing for data to the P2P database 221. More specifically, in the case where the confirmation processing by the confirmation control unit 211 has been performed, the registration control unit 213 registers data confirmation histories (for example, the confirmation processing target data, the confirmation result, confirmation date and time, and attribute information or the like (for example, identification information, IP address information, or the like) of a user who has requested the confirmation processing (or the user device 300)) to the P2P database 221. Note that a case in which the registration control unit 213 registers data to the P2P database 221 is not limited thereto.

### (Storage unit 220)

The storage unit 220 has a functional configuration that stores various types of information. For example, the storage unit 220 stores a program, a parameter, or the like used by each functional configuration of the node device 200 Note that information stored in the storage unit 220 is not limited thereto.

### (P2P database 221)

The P2P database 221 is a database commonly held by the node devices 200, and stores, for example, blockchain data. As described above, the students' learning achievement records (e.g., records related to exam results, credits, qualifications, or the like), the student activity records (e.g., records related to club activities, student council activities, attendance, or the like), data confirmation histories, and the like are registered in the P2P database 221. The various types of information registered in the P2P database 221 may be given an electronic signature using an encryption key, or may be encrypted using an encryption key. Note that the information registered in the P2P database 221 is not limited thereto.

### (P2P database program 222)

The P2P database program 222 is a predetermined program (for example, a chain code or the like) provided in the P2P database 221 and executed on the P2P database 221. By using the P2P database program 222, various types of processing other than transactions of the virtual currency such as Bitcoin are implemented while maintaining consistency according to a predetermined rule, for example.

The P2P database program 222 can implement overall processing performed for the P2P database 221. For example, the P2P database program 222 can implement the arbitrary data authenticity confirmation processing, the data acquisition processing, the data registration processing, and the like, which are performed by accessing the P2P database 221. Note that the processing implemented by the P2P database program 222 is not limited thereto. Further, the development language of the P2P database program 222, the number of P2P database programs 222 provided on the P2P database 221, and the like are not particularly limited.

### (Communication unit 230)

The communication unit 230 has a functional configuration that controls various communications with the data confirmation device 100 and other node devices 200. For example, the communication unit 230 receives the request information requesting the confirmation processing or the request information or the like (for example, a query or the like) used to acquire data from the P2P database 221 in the communication with the data confirmation device 100, and transmits the confirmation result, the data acquired from the P2P database 221, or the like. Furthermore, the communication unit 230 transmits/receives information or the like used for consensus building (also referred to as "consensus") for updating the P2P database 221 in communication with other node devices 200. Note that the communication content of the communication unit 230 is not limited thereto.

The functional configuration example of the node device 200 has been described above. Note that the functional configuration described above with reference to Fig. 6 is merely an example, and the functional configuration of the node device 200 is not limited to such an example. For example, the node device 200 does not necessarily have all of the configurations illustrated in Fig. 6. Furthermore, the functional configuration of the node device 200 can be flexibly modified according to specifications and operations.

### (2.5. Functional configuration example of user device 300)

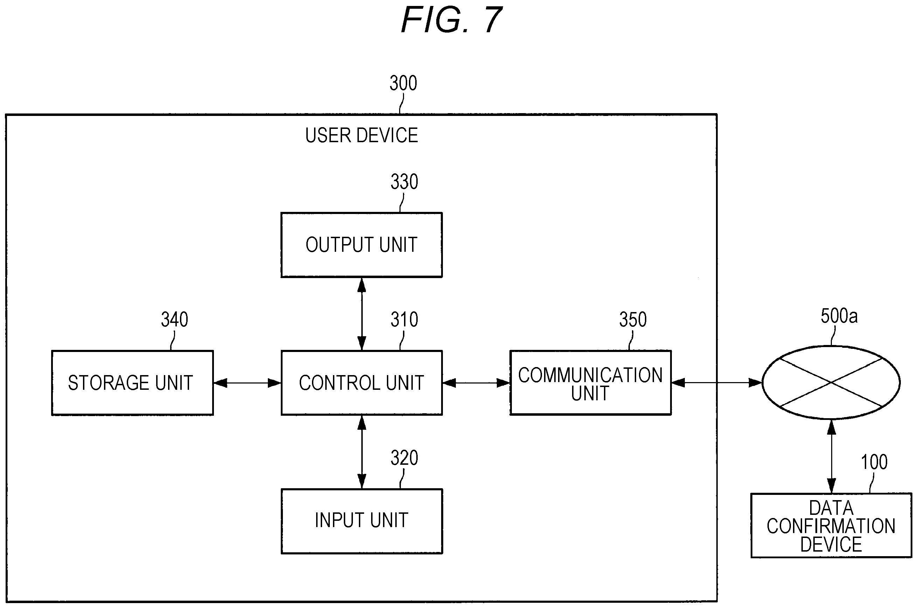

The functional configuration example of the node device 200 has been described above. Next, a functional configuration example of the user device 300 will be described with reference to Fig. 7.

As illustrated in Fig. 7, the user device 300 includes a control unit 310, an input unit 320, an output unit 330, a storage unit 340, and a communication unit 350.

### (Control unit 310)

The control unit 310 has a functional configuration that comprehensively controls overall processing performed by the user device 300. For example, the control unit 310 can control the start and stop of the configurations and control the output unit 330 such as a display or a speaker on the basis of an input performed by the user using the input unit 320, control information from an external device received via the communication unit 350, or the like. Note that the control content of the control unit 310 is not limited thereto. For example, the control unit 310 may control processing generally performed in a general-purpose computer, a PC, a tablet PC, or the like.

### (Input unit 320)

The input unit 320 has a functional configuration that receives an input from the user. For example, the input unit 320 includes an input means such as a mouse, a keyboard, a touch panel, a button, a switch, or a microphone, and the user can input the target data for the authenticity confirmation processing, for example, using such input means. The input unit 320 provides the control unit 310 with the input data. Note that the input means provided in the input unit 320 is not particularly limited.

### (Output unit 330)

The output unit 330 has a functional configuration that outputs various data. For example, the output unit 330 includes a display means such as a display, a sound output means such as a speaker, or the like, and displays the data authenticity confirmation result information or the like on the display or the like or outputs a sound via the speaker or the like on the basis of the control of the control unit 310. Note that output means provided in the output unit 330 is not particularly limited.

### (Storage unit 340)

The storage unit 340 has a functional configuration that stores various types of information. For example, the storage unit 340 stores the target data for the authenticity confirmation processing, the data authenticity confirmation result information, or the like, and stores a program, a parameter, or the like used by each functional configuration of the user device 300. Note that information stored in the storage unit 340 is not limited thereto.

### (Communication unit 350)

The communication unit 350 controls various communications with the data confirmation device 100. For example, the communication unit 350 transmits the request information requesting the data authenticity confirmation processing or the like, and receives the confirmation result, the data acquired from the P2P database 221, various screen data, or the like. Note that the communication content of the communication unit 350 is not limited thereto.

The functional configuration example of the user device 300 has been described above. Note that the functional configuration described above with reference to Fig. 7 is merely an example, and the functional configuration of the user device 300 is not limited to such an example. For example, the user device 300 does not necessarily have all of the configurations illustrated in Fig. 7. Furthermore, the functional configuration of the user device 300 can be flexibly modified according to specifications and operations.

### (2.6. Flow of processing)

The functional configuration example of the user device 300 has been described above. Next, a flow of processing by each device according to the present embodiment will be described.

### (Flow 1 of data authenticity confirmation processing)

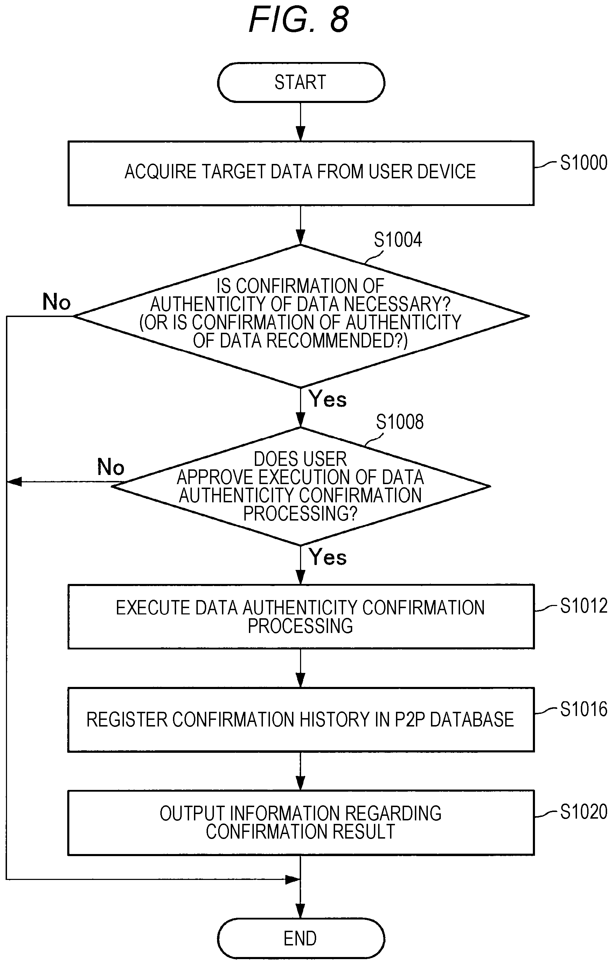

First, an example of a flow of the data authenticity confirmation processing will be described with reference to Fig. 8. Note that Fig. 8 illustrates a case not including the acquisition processing for data from the P2P database 221, which is performed in the case where the data has been confirmed not to be authentic.

In step S1000, the confirmation control unit 111 of the data confirmation device 100 acquires the target data for the confirmation processing from the user device 300. For example, the user inputs the target data using the input unit 320 of the user device 300, and the confirmation control unit 111 acquires the data. Note that, as described above, the data acquisition method is not limited thereto.

In step S1004, the confirmation control unit 111 determines whether or not authenticity confirmation for the data is necessary (or whether or not authenticity confirmation for the data is recommended) on the basis of a predetermined rule. The predetermined rule is, as described above, the data type (including data format), the data confirmation history, the metadata about data, the number of data (or data amount), the presence or absence of an abnormal value in data, the presence or absence of a predetermined keyword in data, or the like.

In a case where the confirmation control unit 111 determines that the authenticity confirmation for the data is necessary (or the authenticity confirmation for the data is recommended) on the basis of the predetermined rule (step S1004/Yes), and in a case where the user has approved execution of the data authenticity confirmation processing (step S1008/Yes), the confirmation control unit 111 provides the node device 200 with the request information of the confirmation processing and the confirmation control unit 211 of the node device 200 executes the confirmation processing in step S1012. More specifically, the confirmation control unit 211 confirms whether or not the same data as the target data itself or the data uniquely specifying the target data is registered in the P2P database 221, using the request information.

In step S1016, the registration control unit 213 registers the data confirmation histories (for example, the confirmation processing target data, confirmation result, confirmation date and time, and attribute information or the like (for example, identification information, IP address information, or the like) of a user who has requested the confirmation processing (or the user device 300)) to the P2P database 221. In step S1020, the display control unit 112 of the data confirmation device 100 provides the user device 300 with the confirmation result information display screen data, so that the output unit 330 of the user device 300 displays the confirmation result information on the screen, and the series of processing is terminated.

In step S1004, in a case where the confirmation control unit 111 determines that the authenticity confirmation for the data is not necessary (or the authenticity confirmation for the data is not recommended) on the basis of the predetermined rule (step S1004/No), or in a case where the user does not approve execution of the data authenticity confirmation processing (step S1008/No) in step S1008, the data authenticity confirmation processing is not executed, and the series of processing is terminated.

### (Flow 2 of data authenticity confirmation processing)

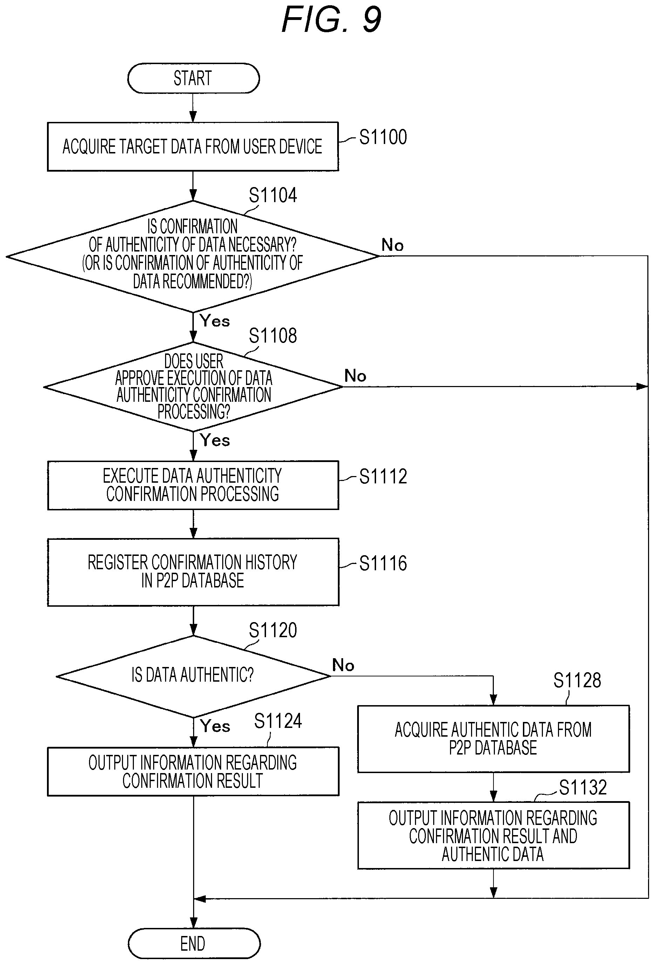

Next, another example of a flow of the data authenticity confirmation processing will be described with reference to Fig. 9. Note that Fig. 9 illustrates a case including the acquisition processing for data from the P2P database 221, which is performed in the case where the data has been confirmed not to be authentic.

Since steps S1100 to S1116 are the same as steps S1000 to S1016 in Fig. 8, description is omitted. Furthermore, in a case where the target data is confirmed to be authentic (step S1120/Yes) in step S1120, the output unit 330 of the user device 300 displays the confirmation result information on the screen, similarly to step S1020 in Fig. 8, and the series of processing is terminated.

On the other hand, in a case where the target data is confirmed not to be authentic (step S1120/No) in step S1120, the acquisition control unit 113 of the data confirmation device 100 provides the node device 200 with the request information (for example, a query or the like) in step S1128, so that the acquisition control unit 212 of the node device 200 acquires authentic data from the P2P database 221. Then, the acquisition control unit 113 of the data confirmation device 100 acquires the authentic data.

In step S1132, the display control unit 112 provides the user device 300 with the confirmation result information display screen data and the authentic data, so that the output unit 330 of the user device 300 displays the confirmation result information and the authentic data on the screen, and the series of processing is terminated.

### (2.7 User interface example)

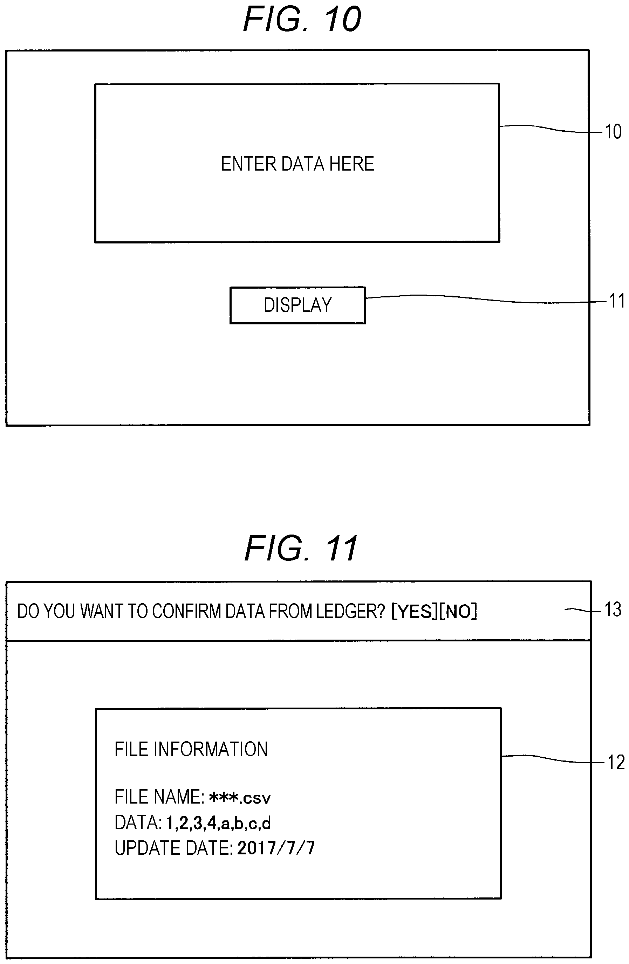

The flow of processing by each device according to the present embodiment has been described above. Next, user interface examples according to the present embodiment will be described with reference to Figs. 10 to 28. Note that, as described above, the provided user interface is not limited to a screen, and user interfaces other than screens (for example, a sound user interface and the like) may be provided. However, hereinafter, a case of providing various screens as the user interfaces will be described. The output unit 330 of the user device 300 acquires the various screen data from the display control unit 112 of the data confirmation device 100, thereby displaying screens to be described below.

First, an example of a confirmation processing target data input screen will be described with reference to Fig. 10. As illustrated in Fig. 10, a data input area 10 and a display button 11 are displayed on the screen.

The data input area 10 is an area in which the target data for the confirmation processing is input. For example, the user may input the target data into the data input area 10 by dragging and dropping the target data (for example, a file or the like) into the data input area 10. Note that the method of inputting target data is not limited thereto. For example, the data input area 10 may be a text box, and the user may input text data into the data input area 10. Furthermore, the number of input target data is not particularly limited. In other words, the user may input one or more target data into the data input area 10. Furthermore, a transition button from an area where files are stored in a file system (for example, a folder, a directory, or the like) into a screen on which one or more files are selectable (for example, a folder window, a directory window, or the like), or the like may be provided, instead of the data input area 10. By pressing the button, the user can easily select one or more files using the screen on which one or more files are selectable.

The display button 11 is a button used when displaying the input target data. More specifically, when the user presses the display button 11 after inputting the target data into the data input area 10, the content of the target data is displayed on the screen. In the present embodiment, the output unit 330 of the user device 300 can display not only the content of the target data simply but also an object (hereinafter simply referred to as "object") used to select necessity of the confirmation processing.

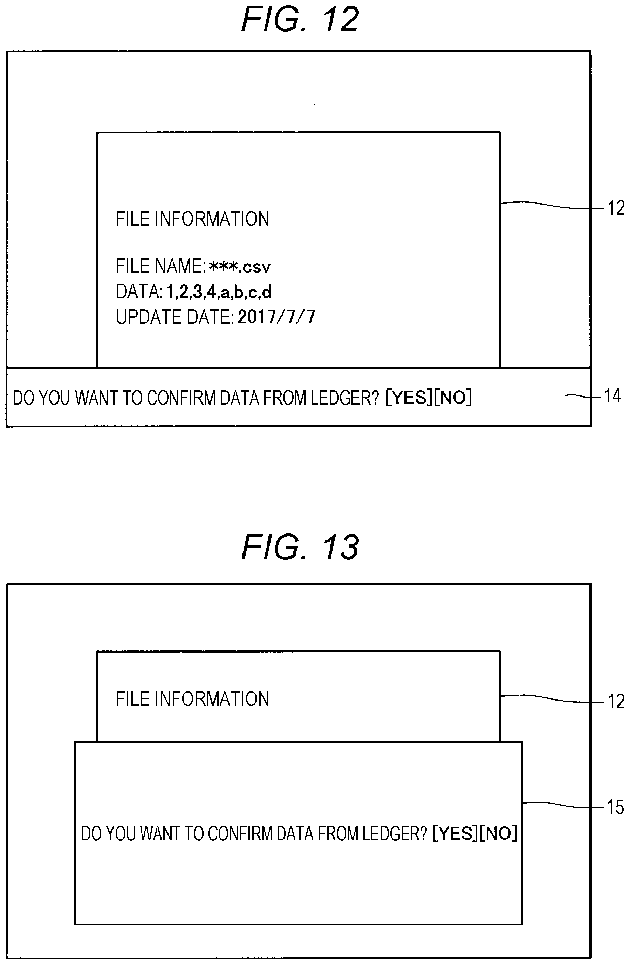

For example, as illustrated in Fig. 11, the output unit 330 can display not only a data display area 12 for displaying the content of the target data but also a bar 13 in an upper portion on the screen as the object used to select the necessity of the confirmation processing. As a result, the user can confirm the content of the target data and can select the necessity of the confirmation processing on the basis of the content. Note that the type, the display position, and the like of the object used to select the necessity of the confirmation processing are not particularly limited. For example, the object used to select the necessity of the confirmation processing may be a bar 14 displayed at the bottom on the screen as illustrated in Fig. 12, a popup 15 displayed near the center on the screen, a popup 16 displayed in a lower right on the screen, or the like.

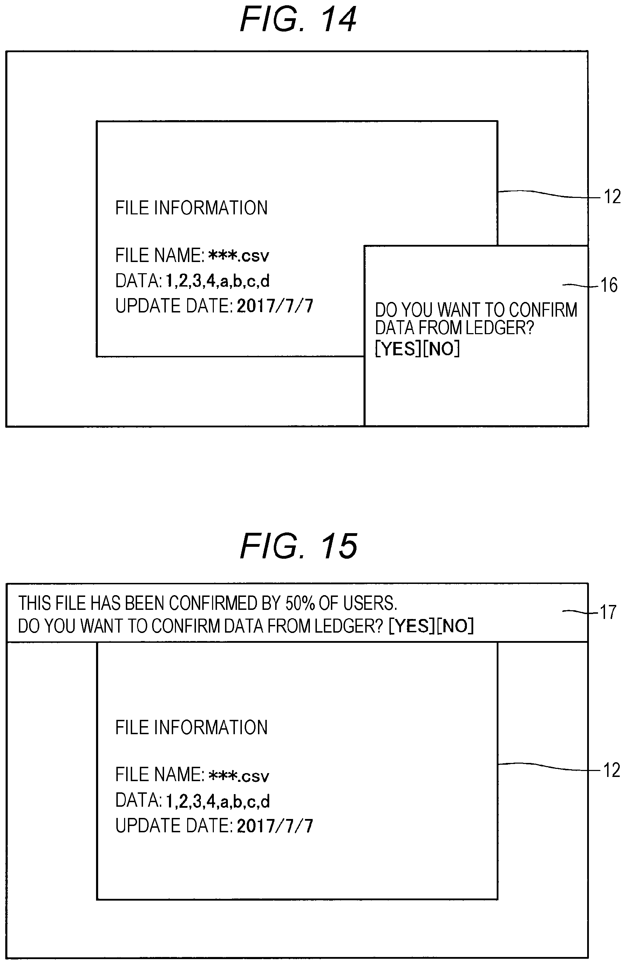

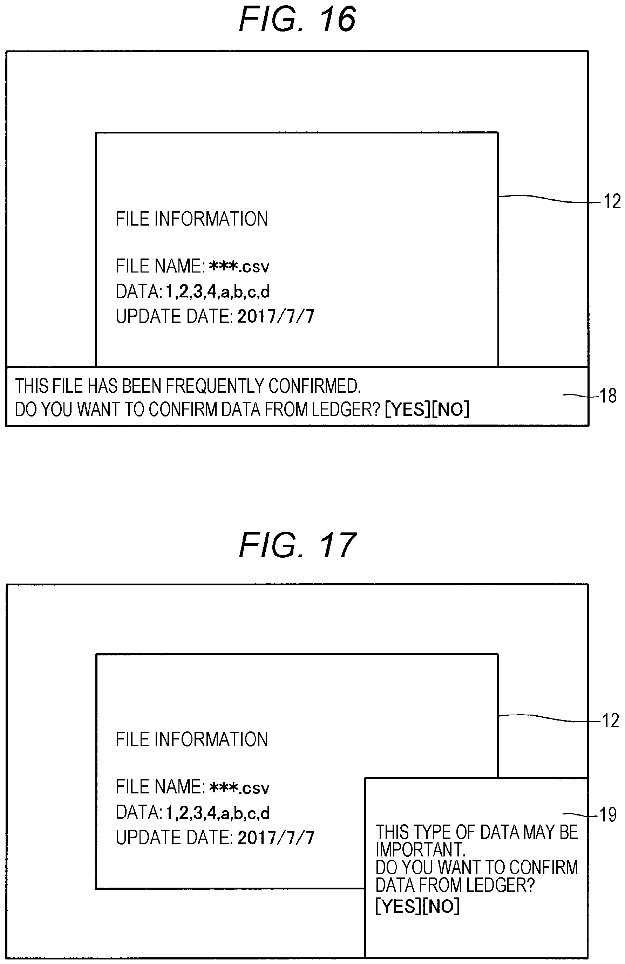

Furthermore, a character string such as "Do you want to confirm data from ledger? [YES][NO]" is displayed in each of the objects in Figs. 11 to 14. However, display content of the objects is not limited thereto. For example, the probability of performing the confirmation processing for the target data may be indicated by displaying a character string such as "This file has been confirmed by 50% of users. Do you want to confirm data from ledger? [YES] [NO]", as illustrated with a bar 17 in Fig. 15. Furthermore, the frequency of performing the confirmation processing for the target data may be indicated by displaying a character string such as "This file has been frequently confirmed. Do you want to confirm data from ledger? [YES] [NO]", as illustrated with a bar 18 in Fig. 16. Furthermore, the information regarding the importance of data to be determined on the basis of the type (including a data format) of data may be indicated by displaying a character string such as "This type of data may be important. Do you want to confirm data from ledger? [YES] [NO]", as illustrated with a popup 19 in Fig. 17. By displaying these pieces of information, the user can more easily determine the necessity of the confirmation processing.

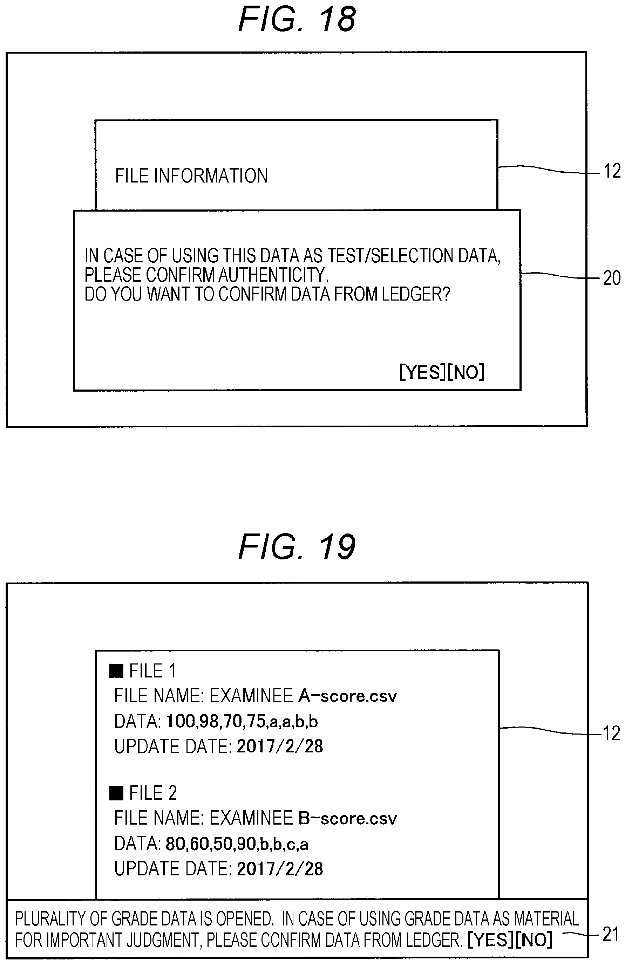

Furthermore, a character string such as "In case of using this data as test/selection data, please confirm authenticity. Do you want to confirm data from ledger? [YES] [NO]" is displayed as illustrated with a popup 20 in Fig. 18, and the confirmation processing may be recommended according to a use purpose of the data.

Furthermore, in a case where contents (data) of a plurality of files are displayed as in a data display area 12 in Fig. 19, there is a possibility that the user tries to make some judgment by comparing the contents of the plurality of files (for example, a case of comparing scores of a test of a plurality of students and determining a successful candidate, or the like). Therefore, in a case where contents of a plurality of files are displayed, a character string such as "A plurality of grade data is opened. In case of using grade data as material for important judgment, please confirm data from ledger. [YES][NO]" is displayed as illustrated with a bar 21, and the data authenticity confirmation may be recommended.

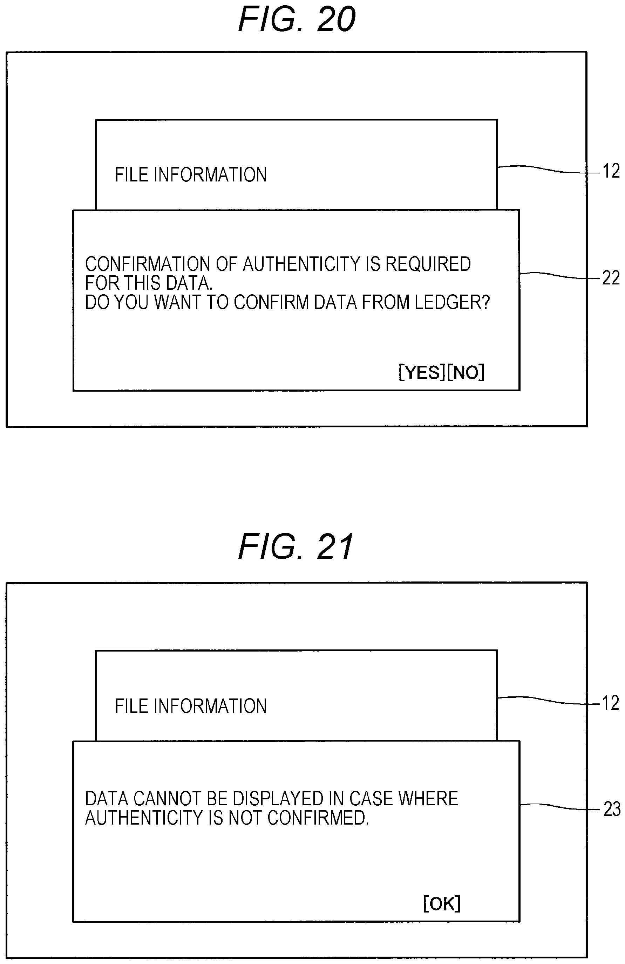

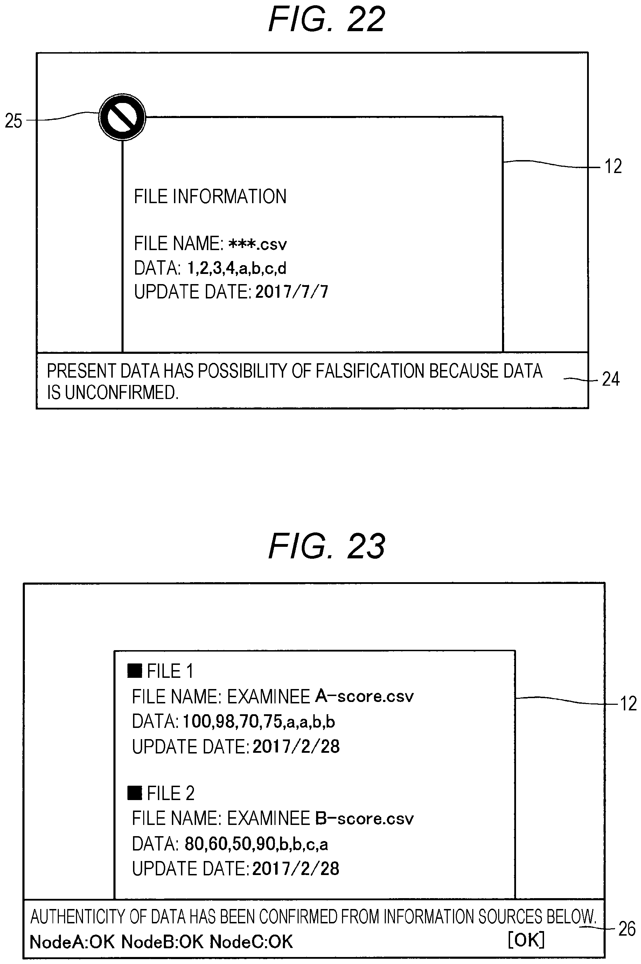

Furthermore, as described above, the creator, the editor, or the like of the data can add the metadata forcing the authenticity confirmation on the basis of the importance, the suspicion of the authenticity, or the like of the data to the data. In this case, a character string such as "Authenticity confirmation is required for this data. Do you want to confirm data from ledger? [YES] [NO]" is displayed as illustrated with a popup 22 in Fig. 20, and the data authenticity confirmation may be forced. Then, if the user refuses the data authenticity confirmation, a character string such as "Data cannot be displayed in case where authenticity is not confirmed. [OK]" is displayed as illustrated with a popup 23 in Fig. 21, and the data may be made unbrowsable. Furthermore, for the data to which the metadata forcing the authenticity confirmation, a character string such as "Present data has possibility of falsification because data is unconfirmed." as illustrated with a bar 24 in Fig. 22 may be displayed and the possibility that the data is not authentic may be displayed until the authenticity is confirmed. Furthermore, at that time, a mark 25 may be displayed together so that the user can intuitively understand the possibility that the data is not authentic.

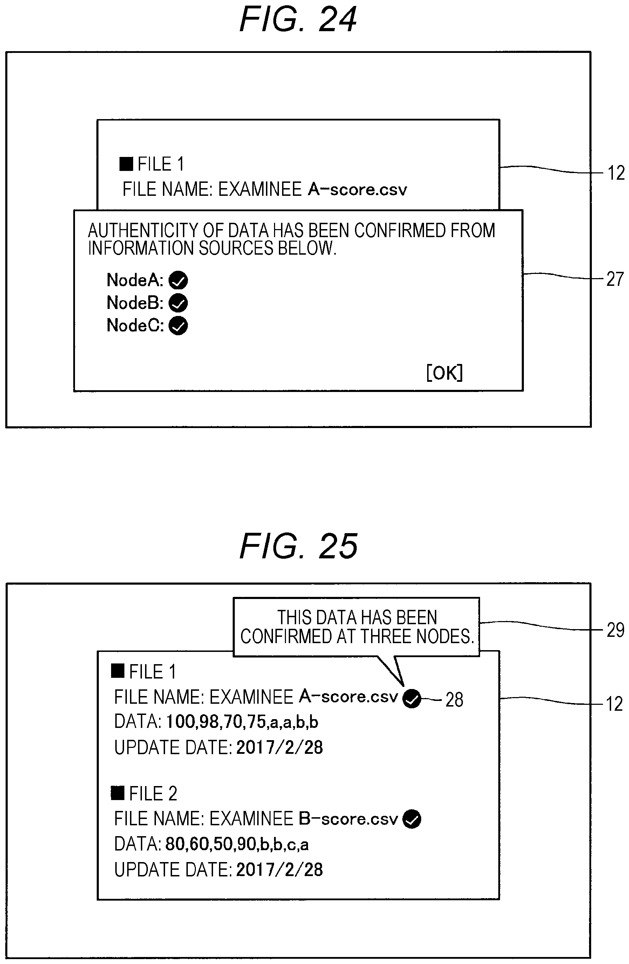

Furthermore, as described above, the data confirmation device 100 may cause a plurality of node devices 200 to confirm the authenticity of data. If the authenticity of the data has been confirmed by a plurality of node devices 200, confirmation results of the node devices 200 may be indicated by displaying a character string such as "Authenticity of data has been confirmed from information sources below: NodeA:OK NodeB:OK NodeC:OK [OK]" as illustrated with a bar 26 in Fig. 23. Furthermore, a mark 28 may be displayed as illustrated with a popup 27 in Fig. 24 so that the user can intuitively understand that the authenticity of the data has been confirmed by the node devices 200. Moreover, in a case where a pointer (cursor) is located near the mark 28, as illustrated in Fig. 25, a popup 29 indicating the number of node devices 200 that have confirmed the authenticity of the data, such as "This data has been confirmed at three nodes" may be displayed.

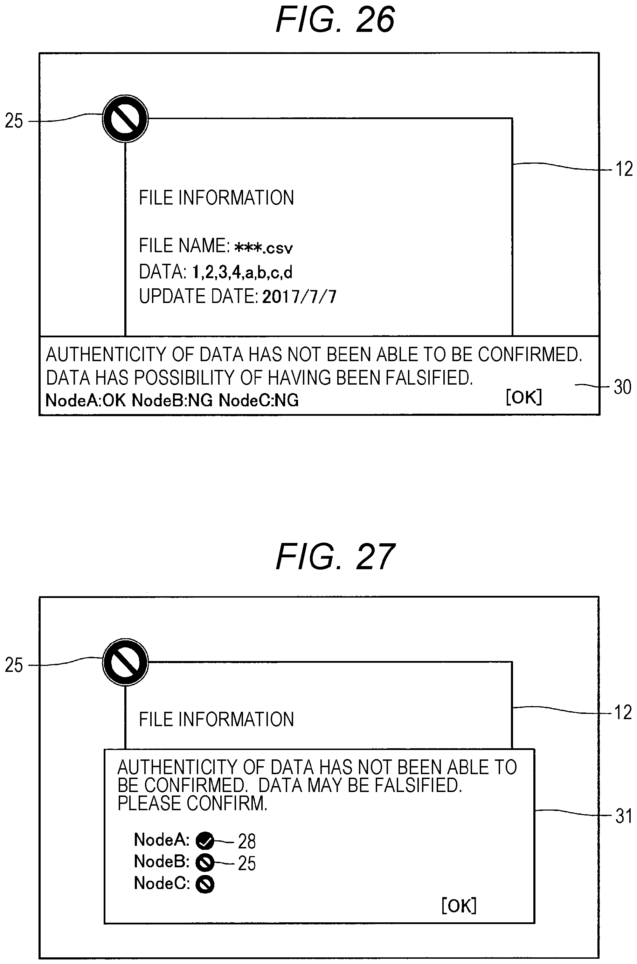

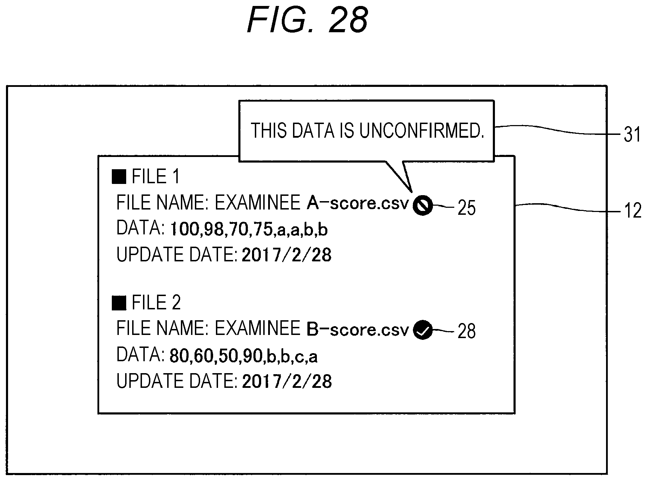

Meanwhile, in a case where some node devices 200, of the plurality of node devices 200 that have confirmed the authenticity of data, have confirmed that the data is not authentic (or in a case where the confirmation processing has not been completed for some reason), a character string such as "Authenticity of data has not been able to be confirmed. Data has possibility of having been falsified. NodeA:OK NodeB:NG NodeC:NG [OK]" as illustrated with a bar 30 in Fig. 26, so that the node devices 200 that have confirmed that the data is authentic and the node devices 200 that have confirmed that the data is not authentic (or for which the confirmation processing has not been completed for some reason) may be indicated. At that time, the mark 25 may be displayed together so that the user can intuitively understand the possibility that the data is not authentic. Note that, in a case where a more reliable node device 200 has confirmed that the data is authentic even though some node devices 200 have confirmed that the data is not authentic, the user may judge that the data is authentic. Furthermore, the mark 25 and the mark 28 may be displayed so that the user can intuitively understand that the node device 200 that has confirmed that the data is authentic and the node device 200 that has confirmed that the data is not authentic, as illustrated with a popup 31 in Fig. 27. Moreover, a popup 31 indicating a character string such as "This data is unconfirmed." may be displayed in a case where a pointer (cursor) is located near the mark 25 or the mark 28, as illustrated in Fig. 28.

### <3. Hardware configuration example>

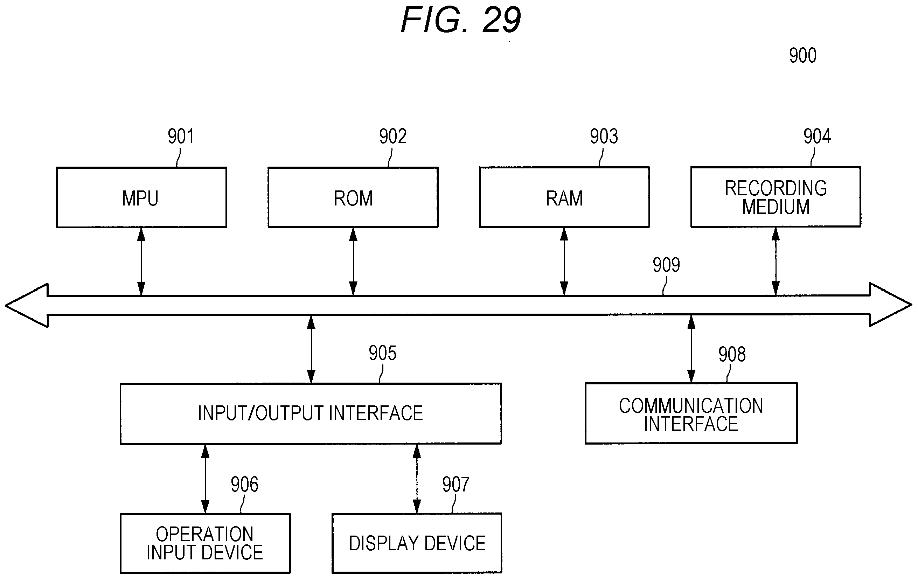

The embodiments of the present disclosure have been described above. Next, a hardware configuration of devices according to the present embodiment will be described with reference to Fig. 29.

Fig. 29 is a block diagram illustrating an example of a hardware configuration of the data confirmation device 100, the node device 200, or the user device 300 according to the present embodiment. The data confirmation device 100, the node device 200, or the user device 300 according to the present embodiment can be implemented by an information processing device 900 illustrated in Fig. 29.

The information processing device 900 includes, for example, an MPU 901, a ROM 902, a RAM 903, a recording medium 904, an input/output interface 905, an operation input device 906, a display device 907, and a communication interface 908. Furthermore, the information processing device 900 has a bus 909 as a data transmission path connecting configuration elements, for example.

The MPU 901 includes, for example, one or two or more processors configured with an arithmetic circuit such as an MPU, various processing circuits, and the like, and functions as the control unit 110 of the data confirmation device 100, the control unit 210 of the node device 200, or the control unit 310 of the user device 300. Note that the control unit 110 of the data confirmation device 100, the control unit 210 of the node device 200, or the control unit 310 of the user device 300 may be configured by a dedicated (or general-purpose) circuit (for example, a separate processor from the MPU 901, or the like), which can implement the above-described various types of processing.

The ROM 902 stores a program and control data such as calculation parameters to be used by the MPU 901, and the like. The RAM 903 temporarily stores, for example, the program to be executed by the MPU 901, or the like.

The recording medium 904 functions as the storage unit 120 of the data confirmation device 100, the storage unit 220 of the node device 200, or the storage unit 340 of the user device 300, and stores various data such as a confirmation result of authenticity of data, and data and various programs regarding information processing according to the present embodiment such as the P2P database 221 or the P2P database program 222. Here, examples of the recording medium 904 include a magnetic recording medium such as a hard disk, and a nonvolatile memory such as a flash memory. Furthermore, the recording medium 904 may be attachable to and detachable from the information processing device 900.

The input/output interface 905 connects, for example, the operation input device 906 and the display device 907. Here, examples of the input/output interface 905 include a universal serial bus (USB) terminal, a digital visual interface (DVI) terminal, a high-definition multimedia interface (HDMI) (registered trademark) terminal, various processing circuits, and the like.

Furthermore, the operation input device 906 is provided on the information processing device 900, for example, and is connected with the input/output interface 905 inside the information processing device 900. Examples of the operation input device 906 include a keyboard, a mouse, a keypad, a touch panel, a microphone, an operation button, a rotary selector such as a direction key and a jog dial, a combination thereof, and the like. The operation input device 906 functions as the input unit 320 of the user device 300.

Furthermore, the display device 907 is provided on the information processing device 900, for example, and is connected with the input/output interface 905 inside the information processing device 900. Examples of the display device 907 include a liquid crystal display, an organic electroluminescence (EL) display, and the like. The display device 907 functions as the output unit 330 of the user device 300.

Note that it goes without saying that the input/output interface 905 can be connected to an external device such as an operation input device outside the information processing device 900 or an external display device. Furthermore, the display device 907 may be a device capable of display and user operation such as a touch panel, for example.

The communication interface 908 is a communication means included in the information processing device 900, and functions as the communication unit 130 of the data confirmation device 100, the communication unit 230 of the node device 200, or the communication unit 350 of the user device 300. Furthermore, the communication interface 908 may have a function to perform wireless or wired communication with an arbitrary external device such as a server, for example, via an arbitrary network (or directly). Here, examples of the communication interface 908 include a communication antenna and radio frequency (RF) circuit (wireless communication), IEEE802.15.1 port and transmission/reception circuit (wireless communication), IEEE802.11 port and transmission/reception circuit (wireless communication), and a local area network (LAN) terminal, a transmission/reception circuit (wired communication), and the like.

Note that the hardware configuration of the information processing device 900 according to the present embodiment is not limited to the configuration illustrated in Fig. 29. For example, in a case of performing communication via a connected external communication device, the information processing device 900 may not include the communication interface 908. Furthermore, the communication interface 908 may be able to perform communication by a plurality communication methods. Furthermore, the information processing device 900 may not include the operation input device 906, the display device 907, or the like, for example. Furthermore, for example, a part or all of the configurations illustrated in Fig. 29 may be implemented by one or two or more integrated circuits (ICs).

### <4. Conclusion>

As described above, the data confirmation device 100 can provide the information regarding authenticity of arbitrary data generated on the basis of the management data of the P2P database 221 to the user device 300 not including the P2P database 221. As a result, the user device 300 not including the P2P database 221 can confirm the authenticity of arbitrary data on the basis of the management data of the P2P database 221. Furthermore, the data confirmation device 100 can improve the usability by providing the various user interfaces regarding the data authenticity confirmation processing.

Furthermore, in the case of confirming that the data is not authentic by the data authenticity confirmation processing, the data confirmation device 100 can control the acquisition processing for authentic data from the P2P database 221 and can provide the user with the authentic data. As a result, the data confirmation device 100 can reduce the labor of the user himself/herself obtaining authentic data again, and can improve the convenience for the user.

Furthermore, in the case where the data authenticity confirmation processing has been performed, the node device 200 can register the data confirmation histories to the P2P database 221. The confirmation histories can be used as various index values (for example, index values of importance, attention degree, suspicion of authenticity, and the like of data).

Although the favorable embodiment of the present disclosure has been described in detail with reference to the accompanying drawings, the technical scope of the present disclosure is not limited to such examples. It is obvious that persons having ordinary knowledge in the technical field of the present disclosure can conceive various modifications or alterations within the scope of the technical idea described in the claims, and the modifications and alterations are naturally understood to belong to the technical scope of the present disclosure.

For example, the above-described steps in the flowcharts or sequence diagrams do not necessarily need to be processed chronologically in the described order. That is, the steps in the flowcharts or sequence diagrams may be processed in an order different from the described order or may be processed in parallel.

Furthermore, the effects described in the present specification are merely illustrative or exemplary and are not restrictive. That is, the technology according to the present disclosure can exhibit other effects obvious to those skilled in the art from the description of the present specification together with or in place of the above-described effects.

Note that the following configurations also belong to the technical scope of the present disclosure.
(1) An information processing device including:
   an acquisition unit configured to acquire information regarding authenticity of arbitrary data, the information being generated on the basis of management data of a P2P database; and
   a provision unit configured to provide the information regarding authenticity of arbitrary data to a device not including the P2P database.
(2) The information processing device according to (1), in which
   the information regarding authenticity of arbitrary data is information regarding whether or not the arbitrary data or data uniquely specifying the arbitrary data is included in the management data.
(3) The information processing device according to (2), in which
   the data uniquely specifying the arbitrary data is a hash value of the arbitrary data.
(4) The information processing device according to (2) or (3), further including:
   a confirmation control unit configured to control confirmation as to whether or not the arbitrary data or the data uniquely specifying the arbitrary data is included in the management data.
(5) The information processing device according to (4), in which
   the confirmation control unit controls the confirmation on the basis of a predetermined rule regarding a type of the arbitrary data, a confirmation history of the arbitrary data, metadata of the arbitrary data, a number or a size of the arbitrary data, presence or absence of an abnormal value in the arbitrary data, or presence or absence of a predetermined keyword in the arbitrary data.
(6)
   The information processing device according to (5), in which
   the provision unit provides a user with information to be used for judgment for necessity of the confirmation, information recommending the confirmation, or information forcing the confirmation on the basis of the predetermined rule, and
   the confirmation control unit controls the confirmation on the basis of an input from the user.
(7) The information processing device according to any one of (4) to (6), in which
   the confirmation control unit controls the confirmation for a plurality of devices each including the P2P database.
(8) The information processing device according to any one of (4) to (7), further including:
   a registration control unit configured to control registration of history information regarding the confirmation for the P2P database.
(9) The information processing device according to any one of (1) to (8), further including:
   an acquisition control unit configured to control acquisition of data from the P2P database in a case where inauthenticity of the arbitrary data has been confirmed.
(10) The information processing device according to any one of (1) to (9), in which
   the arbitrary data is same as data acquired from the P2P database or data acquired from a cache storage unit that caches data acquired from the P2P database.
(11) The information processing device according to any one of (1) to (10), in which
   the P2P database stores blockchain data.
(12) An information processing method executed by a computer, the method including:
   acquiring information regarding authenticity of arbitrary data, the information being generated on the basis of management data of a P2P database; and
   providing the information regarding authenticity of arbitrary data to a device not including the P2P database.
(13) A program for causing a computer to execute:
   acquiring information regarding authenticity of arbitrary data, the information being generated on the basis of management data of a P2P database; and
   providing the information regarding authenticity of arbitrary data to a device not including the P2P database.

### REFERENCE SIGNS LIST

- 100: Data confirmation device
- 110: Control unit
- 111: Confirmation control unit
- 112: Display control unit
- 113: Acquisition control unit
- 120: Storage unit
- 130: Communication unit
- 200: Node device
- 210: Control unit
- 211: Confirmation control unit
- 212: Acquisition control unit
- 213: Registration control unit
- 220: Storage unit
- 221: P2P database
- 222: P2P database program
- 230: Communication unit
- 300: User device
- 310: Control unit
- 320: Input unit
- 330: Output unit
- 340: Storage unit
- 350: Communication unit
- 400: P2P network
- 500: Network

## Claims

1. An information processing device comprising:
an acquisition unit configured to acquire information regarding authenticity of arbitrary data, the information being generated on a basis of management data of a P2P database; and
a provision unit configured to provide the information regarding authenticity of arbitrary data to a device not including the P2P database.

2. The information processing device according to claim 1, wherein
the information regarding authenticity of arbitrary data is information regarding whether or not the arbitrary data or data uniquely specifying the arbitrary data is included in the management data.

3. The information processing device according to claim 2, wherein
the data uniquely specifying the arbitrary data is a hash value of the arbitrary data.

4. The information processing device according to claim 2, further comprising:
a confirmation control unit configured to control confirmation as to whether or not the arbitrary data or the data uniquely specifying the arbitrary data is included in the management data.

5. The information processing device according to claim 4, wherein
the confirmation control unit controls the confirmation on a basis of a predetermined rule regarding a type of the arbitrary data, a confirmation history of the arbitrary data, metadata of the arbitrary data, a number or a size of the arbitrary data, presence or absence of an abnormal value in the arbitrary data, or presence or absence of a predetermined keyword in the arbitrary data.

6. The information processing device according to claim 5, wherein
the provision unit provides a user with information to be used for judgment for necessity of the confirmation, information recommending the confirmation, or information forcing the confirmation on a basis of the predetermined rule, and
the confirmation control unit controls the confirmation on a basis of an input from the user.

7. The information processing device according to claim 4, wherein
the confirmation control unit controls the confirmation for a plurality of devices each including the P2P database.

8. The information processing device according to claim 4, further comprising:
a registration control unit configured to control registration of history information regarding the confirmation for the P2P database.

9. The information processing device according to claim 1, further comprising:
an acquisition control unit configured to control acquisition of data from the P2P database in a case where inauthenticity of the arbitrary data has been confirmed.

10. The information processing device according to claim 1, wherein
the arbitrary data is same as data acquired from the P2P database or data acquired from a cache storage unit that caches data acquired from the P2P database.

11. The information processing device according to claim 1, wherein the P2P database stores blockchain data.

12. An information processing method executed by a computer, the method comprising:
acquiring information regarding authenticity of arbitrary data, the information being generated on a basis of management data of a P2P database; and
providing the information regarding authenticity of arbitrary data to a device not including the P2P database.

13. A program for causing a computer to execute:
acquiring information regarding authenticity of arbitrary data, the information being generated on a basis of management data of a P2P database; and
providing the information regarding authenticity of arbitrary data to a device not including the P2P database.
